# EUROPÄISCHE PATENTSCHRIFT

(11) **EP 0 425 824 B1**
(45) Veröffentlichungstag und Bekanntmachung des Hinweises auf die Patenterteilung: **24.11.1993**
(21) Anmeldenummer: 90118768.2
(22) Anmeldetag: 29.09.1990
(51) Int. Cl.: A23F 5/02, A23F 5/16

(54) **Verfahren zur Qualitätsverbesserung von Robusta-Kaffee**
Process for improving the quality of robusta coffee
Procédé d'amélioration de la qualité de café robusta

(30) Priorität: 28.10.1989 DE 3936020
(43) Veröffentlichungstag der Anmeldung: 08.05.1991
(73) Patentinhaber: Kraft Jacobs Suchard SA, CH-8008 Zürich (CH)
(72) Erfinder: Becker, Rainer, Dr., D-2810 Verden (DE); Schlabs, Brigitte, D-2800 Bremen 1 (DE); Weisemann, Claus, Dr., D-2810 Verden (DE)
(74) Vertreter: Bolte, Erich, Dipl.-Ing.

(56) Entgegenhaltungen:
- EP-A- 0 234 712
- EP-A- 0 282 345
- CH-A- 339 039
- DE-B- 1 037 829
- US-A- 3 767 418

## Beschreibung

Die Erfindung betrifft ein Verfahren zur Qualitätsverbesserung von Robusta-Kaffee durch Behandlung von rohen Robusta-Kaffeebohnen mit Wasserdampf bei erhöhter Temperatur und erhöhtem Druck und anschließendem Rösten.

Robusta Kaffees stammen aus Anbaugebieten niedrigerer Lagen. Der Geschmack von Robusta Kaffees ist kräftig und herb, weist allerdings auch eine "erdige", "muffige" Note auf. Diese letztgenannte Geschmacksnote ist in vielen Verbraucherländern nicht erwünscht. Aufgrund ihres kräftigen Grundgeschmacks und des höheren Coffeingehaltes werden Robusta Kaffees häufig zu einem erheblichen Teil milden Kaffeesorten (z.B. Arabica Kaffee) zugemischt, um den Geschmack der Endprodukte zu verstärken und ihren Coffeeingehalt anzuheben.

Die in vielen Verbraucherländern "erdige", "muffige" Geschmacksnote ist auch dann noch sensorisch wahrzunehmen, wenn der Anteil an Robusta Kaffee gering ist. Die Kaffeeindustrie ist daher seit langem bestrebt, Möglichkeiten zur Verbesserung der organoleptischen Eigenschaften von Robusta-Kaffee zu schaffen.

Ein bekanntes Verfahren, das die qualitative Verbesserung von Kaffee beansprucht, ist in der DE-AS 576 515 beschrieben. Rohe Kaffeebohnen werden der Einwirkung von Wasserdampf ausgesetzt. Die Behandlung erfolgt während der Bewegung der Bohnen über einen Zeitraum von mindestens 1 Stunde und mit einem Überdruck von 1-3 atm. bis zur Aufnahme einer Wassermenge von 6 % bis 10 %.

Ein neueres Verfahren zur qualitativen Verbesserung von grünen Kaffeebohnen ist Gegenstand der EP-A-234 712. Es werden folgende Verfahrensschritte empfohlen:
- Wasserdampfbehandlung der grünen Bohnen bei etwa 258°F bis 316°F - entsprechend etwa 126°C bis 158°C - bei einem Druck von 20 psi bis etwa 70 psi
- entsprechend etwa 1,4 bar bis etwa 5 bar - 0,5 min bis etwa 3 min lang;
- anschließend Befeuchten der Kaffeebohnen mit Wasser während einer Dauer von 0,5 min bis 2 min;
- erneute Behandlung der Kaffeebohnen mit Dampf bei einem Druck von 1,38 bar bis 5 bar und einer Dauer von 0,5 min bis 4 min;
- Rösten der Bohnen.

Die genannten Verfahren führen bei verschiedenen Kaffeesorten bzw. -provenienzen zu merklichen Qualitätsverbesserungen. Allerdings sind diese Qualitätsverbesserungen bei Robusta-Kaffees unbefriedigend. Die nach bekannten Verfahren behandelten Robusta-Kaffees besitzen immer noch eine bestimmte unangenehme Aromanote, die die Qualität nicht unerheblich beeinträchtigen.

Aufgabe der vorliegenden Erfindung ist es nun, ein Verfahren zur Qualitätsverbesserung speziell von Robusta-Kaffee bereitzustellen.

Diese Aufgabe wird erfindungsgemäß dadurch gelöst, daß der Wassergehalt der Robusta-Kaffeebohnen auf 30 % bis 45 % erhöht und die Kaffeebohnen sodann mit Sattdampf von 135°C bis 140°C bei einem Druck von 3 bar bis 4 bar über einen Zeitraum von 40 min bis 120 min behandelt werden, insbesondere zur Entfernung von 2-Methylisoborneol, des als Schlüsselverbindung für Robusta-Aroma erkannten Inhaltsstoffs.

Bei dem erfindungsgemäßen Verfahren wird demnach zunächst der Wassergehalt der grünen Robusta-Kaffeebohnen gegenüber dem natürlicherweise vorgegebenen Wassergehalt - üblicherweise in der Größenordnung von etwa 8 % bis 12 % - beträchtlich erhöht, nämlich auf einen Wassergehalt von 30 % bis 45 %. Danach erfolgt eine Behandlung der Kaffeebohnen mit Sattdampf bei erhöhtem Druck. Für den erfindungsgemäß angestrebten Erfolg ist es dabei von Bedeutung, daß die Parameter des Verfahrens, nämlich die Temperturbereiche des Sattdampfes, der Druck und die Behandlungsdauer eingehalten werden.

Optimale Ergebnisse werden erzielt, wenn die Sattdampfbehandlung bei etwa 138°C und einem Druck von 3,1 bar bis 3,6 bar während eines Zeitraums von 75 min bis 90 min durchgeführt wird.

Der erste Verfahrensschritt, nämlich die Erhöhung des Wassergehalts der Robusta-Kaffeebohnen, kann auf verschiedene Weise durchgeführt werden.

Nach einem bevorzugten Ausführungsbeispiel der Erfindung werden die rohen Robusta-Kaffeebohnen mit dem niedrigen Wassergehalt im Druckbehälter mit Wasserdampf mindestens etwa 20 min lang behandelt, wobei die Temperatur des Wasserdampfes bis auf etwa 135°C erhöht wird; der Druck steigt dabei bis auf etwa 3,1 bar. Die Rohkaffee-Bohnen werden vorteilhaft kontinuierlich in Bewegung gehalten, so daß eine gleichmäßige Wasseraufnahme stattfinden kann. Wenn der erforderliche Wassergehalt der Bohnen (von etwa 30 % bis 40 %) erreicht ist, wird das (obere) Ventil des Druckbehälters geöffnet und mit der Dampfbehandlung unter Sattdampfbedingungen nach dem erfindungsgemäßen Verfahren begonnen. Natürlich können auch anderweitig auf einen Wassergehalt von etwa 30 % bis 45 % gebrachte rohe Robusta-Kaffeebohnen in einem entsprechenden Druckbehälter vorgelegt und damit das erfindungsgemäße Verfahren begonnen werden. Der Sattdampf wird dann bei einer Temperatur innerhalb des sehr engen Intervalls von etwa 135 °C bis 140°C - vorzugsweise bei etwa 138°C - und einem Druck zwischen etwa 3 bar bis 4 bar - vorzugsweise zwischen etwa 3,1 bar bis 3,6 bar - während etwa 60 min bis 120 min - vorzugsweise während etwa 75 min bis 90 min - durch die Bohnen geleitet. Dies kann zwar ohne ständige Bewegung der Bohnen geschehen; bevorzugt ist jedoch eine ständige Bewegung, weil damit eine gleichmäßigere Behandlung möglich ist.

Nach Beendigung der Behandlung wird die Dampfdurchleitung gestoppt, während noch über einen Zeitraum von vorzugsweise etwa 5 min bis 10 min der Wasserdampf, der sich noch im Druckgefäß befindet, weiter abgezogen wird. Dabei erfolgt ein Druckausgleich.

Die Bohnen werden anschließend auf einen Feuchtigkeitsgehalt von zweckmäßig etwa 8 % bis 12 % getrocknet. Für diesen Trocknungsvorgang können die üblichen Trocknungsverfahren angewandt werden. Das Rücktrocknen auf einen Wassergehalt von etwa 8 % bis 12 % hat den Vorteil, daß die gedämpften Bohnen nicht sofort geröstet werden müssen, sondern wie ungedämpfte Rohkaffee-Bohnen eine gewisse Zeit gelagert werden können. Die auf den genannten Wassergehalt zurückgetrockneten dampfbehandelten Rohkaffee-Bohnen können mit den üblichen Rösttechniken geröstet werden. Vorzugsweise werden die gedämpften und getrockneten Rohkaffee-Bohnen im Wirbelschichtröster durch Einleitung heißer Röstgase bis zum gewünschten Farbwert geröstet.

Eine erfindungsgemäße Alternative, den Wassergehalt von handelsüblichen Rohkaffee-Bohnen auf einen Wert im Bereich von 30 % bis 45 % einzustellen, besteht in der Absorption von Wasser eine Temperatur von 80°C bis 90°C. Hierzu wird eine vorher experimentell bestimmte Wassermenge zu den Rohkaffee-Bohnen gegeben. Die Rohkaffee-Bohnen werden kontinuierlich in Bewegung gehalten, damit eine gleichmäßige und vollständige Wasseraufnahme erfolgen kann, d.h. es darf keine Extraktion wasserlöslicher Stoffe stattfinden. Wenn die Rohkaffee-Bohnen die vorbestimmte Wassermenge absorbiert haben, d.h. eine Wassergehalt im Bereich von 30 % bis 45 % aufweisen, wird die Sattdampfbehandlung nach dem erfindungsgemäßen Verfahren durchgeführt.

Die wichtigste Besonderheit der Erfindung besteht darin, daß Robusta-Röstkaffees, die aus den so behandelten Robusta-Kaffeebohnen gewonnen werden, die spezielle robustatypische "erdige" und "muffige" Note nicht mehr aufweisen. Diese Robusta-Kaffees werden als angenehm, kaum mehr nach Robusta schmeckend bezeichnet. Wegen der anderweitig kaum zu vermindernden unangenehmen robustatypischen Aromanote stellt die Erfindung daher einen erheblichen Fortschritt auf dem Gebiet der Qualitätsverbesserung von Robusta-Kaffee dar.

Im Hinblick auf die bekannten Verfahren zur Qualitätsverbesserung durch Wasserdampfbehandlung der rohen Kaffeebohnen, bei denen ein Verschwinden des robustatypischen, unangenehmen Geschmacks nicht erreicht wird, ist der Erfolg des erfindungsgemäßen Verfahrens durchaus überraschend.

Robusta-Kaffees, deren Rohbohnen bei niedriger Temperatur - also unterhalb von etwa 135°C - unter ansonsten den gleichen Druck- und Behandlungszeit-Bedingungen wie nach dem erfindungsgemäßen Verfahren behandelt wurden, schmecken noch deutlich "erdig" und "muffig", selbst wenn die Behandlungszeiten verlängert werden.

Auch bei Behandlungstemperaturen über etwa 140°C tritt ein unangenehmer Nachgeschmack ("Behandlungsgeschmack") auf, und zwar auch bei kürzeren - d.h. unterhalb von etwa 60 min liegender - Behandlungszeiten. Das zeigt, daß die Einhaltung der erfindungsgemäßen Temperatur-, Druck- und Behandlungszeit-Bedingungen und die Kombination für die überraschende Qualitätsverbesserung von Robusta-Kaffees wesentlich und kritisch ist.

Es wurde auch versucht herauszufinden, wodurch der überraschende Erfolg des erfindungsgemäßen Verfahrens bedingt ist. Bei diesen Untersuchungen hat sich gezeigt, daß bei genauer Einhaltung der erfindungsgemäßen Bedingungen eine bestimmte Verbindung entfernt wird, welche mutmaßlich für die unangenehme Geschmacksnote verantwortlich ist; es handelt sich um die Verbindung 2-Methylisoborneol (exo-1, 2, 7, 7-tetramethylbicyclo (2.2.1) heptan-2ol).

Die Identifizierung von 2-Methylisoborneol in Kaffee erfolgte gaschromatographisch und massenspektrometrisch. 2-Methylisoborneol ist zwar eine bekannte Verbindung, die jedoch als eine Aroma-Impact-Komponente von Robusta-Kaffees bisher noch nicht erkannt und beschrieben wurde.

Nachdem die Verbindung aufgrund der Untersuchungen im Zusammenhang mit dem erfindungsgemäßen Verfahren identifiziert und auch isoliert war, wurden damit u.a. sensorische Schwellenwertbestimmungen in Wasser durchgeführt. Diese Schwellenwertbestimmungen ergaben, daß schon eine Konzentration von etwa 2,5 ppt bis 5 ppt 2-Methylisoborneol in Wasser einen deutlich "erdigen" und "muffigen" Eindruck hinterläßt, d.h. daß sich schon extrem geringe Mengen von 2-Methylisoborneol sensorisch bemerkbar machen und den Geschmack daher beeinflussen.

Schließlich haben die Untersuchungen im Zusammenhang mit der vorliegenden Erfindung auch bestätigt, daß 2-Methylisoborneol in Robusta-Kaffees, welche keine erfindungsgemäße Behandlung durchlaufen (haben), auch nach dem Rösten noch nachweisbar ist - dabei also nicht entfernt wird.

Nachfolgend wird das erfindungsgemäße Verfahren anhand von Beispielen näher erläutert.

### Beispiel 1:

10 kg indonesischer Robusta-Rohkaffee werden in einen 50 1-Autoklaven eingefüllt. Über einen Zeitraum von 10 min wird Wasserdampf mit einer Temperatur von 115°C bis 135°C in den Autoklaven geleitet. Der Druck im Druckgefäß steigt bis auf 3,1 bar. Die Rohkaffee-Bohnen werden kontinuierlich im Autoklaven bewegt, so daß eine gleichmäßige Wasseraufnahme stattfinden kann. Nach 10 min ist der Wassergehalt der Rohkaffee-Bohnen auf 35 % gestiegen.

Anschließend wird Sattdampf einer Temperatur von 135°C über 90 min durch die Bohnen geleitet, der Druck im Druckbehälter beträgt 3,1 bar. Der Dampf wird mit 10,2 l/Std. durch den Autoklaven geleitet. Nach 90 min Sattdampfdurchströmung wird die Dampfzufuhr gestoppt, über einen Zeitraum von 7 min wird der sich im Autoklaven befindliche Dampf aber noch abgezogen.

Der mit Dampf behandelte Robusta-Rohkaffee wird danach im Wirbelschichttrockner auf einen Wassergehalt von 10 % zurückgetrocknet und anschließend auf einen mittleren Farbwert geröstet. Die geröstete Probe wird im Vergleich zum Original verkostet. Der "erdige", "muffige" robustatypische Geschmack ist praktisch nicht mehr wahrnehmbar. Kaffee-Experten stellen eine deutliche Qualitätsverbesserung gegenüber dem Original fest.

Die geröstete Probe wurde auf 2-Methylisoborneol am zweidimensionalen GC (Sichromat der Firma Siemens) und mittels Sniffing-Analyse untersucht. Während im Original 0,6 ppb (µg/kg Röstkaffeepulver) 2-Methylisoborneol nachweisbar waren, konnte bei der erfindungsgemäß behandelten Probe bei einer analytischen Nachweisgrenze von 0,05 ppb (µg/kg Röstkaffeepulver kein 2-Methylisoborneol mehr nachgewiesen werden.

### Beispiel 2:

10 kg indonesischer Robusta-Rohkaffee werden in einen 50 l-Autoklaven eingefüllt. Über einen Zeitraum von 20 min bis 30 min wird Wasser einer Temperatur von 80°C bis 90°C mit einem Durchsatz von ca. 6,3 l/h in den Autoklaven geleitet. Die Rohkaffee-Bohnen werden kontinuierlich in Bewegung gehalten, damit eine gleichmäßige und vollständige Wasseraufnahme stattfinden kann, d.h. ohne Extraktbildung. Nach Einleitung von 2,6 kg Wasser über 20 min bis 30 min und vollständiger Aufnahme durch die Rohkaffee- Bohnen steigt der Wassergehalt der Rohkaffee-Bohnen auf ca. 40 %.

Anschließend wird Sattdampf einer Temperatur von 135°C bis 140°C eingeleitet. Wenn der Druck im Autoklaven etwa 3,1 bar erreicht hat, wird ein Ventil am Autoklavenausgang geöffnet und Sattdampf durch die Bohnen geleitet. Dabei wird das Verfahren unter den in Beispiel 1 angegebenen Bedingungen durchgeführt. An die Behandlung mit Wasserdampf schließt sich wie in Beispiel 1 ein Trocknungsschritt im Wirbelstromtrockner sowie der Röstprozeß an.

In der gerösteten Probe konnte mit analytischen Methoden kein 2-Methylisoborneol nachgewiesen werden.

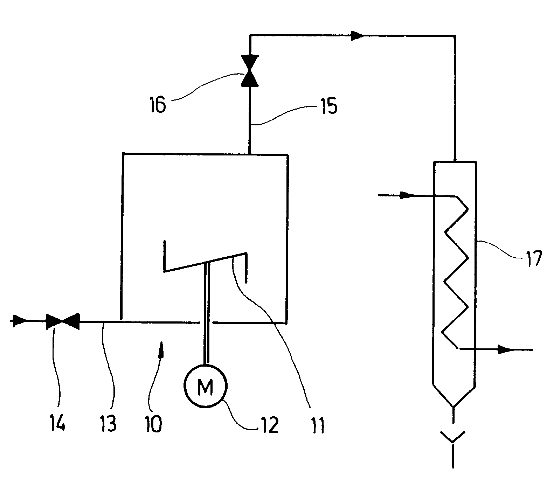

Vorrichtungen zur Durchführung des erfindungsgemäßen Verfahrens können in verschiedener Weise ausgebildet sein. In der Zeichnung ist eine bevorzugte Vorrichtung schematisch dargestellt.

Die Behandlung der Rohkaffee-Bohnen erfolgt in einem Autoklaven 10. Innerhalb desselben befindet sich ein Rührwerk 11, welches von einem Motor 12 angetrieben ist. Rohkaffee kann über eine nicht gezeigte, verschließbare Öffnung in den Autoklaven 10 eingegeben und diesem entnommen werden.

Im unteren Bereich des Autoklaven bzw. am Boden desselben befindet sich eine Zuführungsleitung 13 mit (elektromagnetischem) Schaltventil 14. Eine Abführungsleitung 15, ebenfalls mit einem Schaltventil 16, schließt im oberen Bereich an den Autoklaven 10 an, im vorliegenden Fall an eine obere Stirnwand. Die Abführungsleitung 15 führt zu einem herkömmlichen Kondensator 17.

Erfindungsgemäß wird das gesamte Verfahren, einschließlich der Vorbehandlung zur Erhöhung des Wassergehalts in den Kaffeebohnen, in ein und demselben Behälter, nämlich den Autoklaven 10 durchgeführt. Zu diesem Zweck wird nach dem Einfüllen der Robusta-Kaffeebohnen zunächst über die Zuführungsleitung 13 Dampf in den Autoklaven 11 geleitet. Die Abführungsleitung 15 ist dabei geschlossen. Während dieser Dampfbehandlung werden die Kaffeebohnen im Autoklaven 10 durch das Rührwerk 11 ständig bewegt.

Wenn die Kaffeebohnen den gewünschten Wassergehalt aufgenommen haben, wird die Abführungsleitung 15 geöffnet. Nunmehr wird über die Zuführungsleitung 13 Sattdampf in den Autoklaven 10 eingeleitet, und zwar mit einer Temperatur zwischen 135°C und 140°C bei einem Druck zwischen 3 bar bis 4 bar. Die Dauer dieser Behandlung beträgt etwa 60 min bis 120 min. Der durch die Bohnen hindurchgeleitete Sattdampf gelangt über die Abführungsleitung 15 in den Kondensator und wird hier kondensiert.

Bei der ersten Phase der Behandlung kann statt Dampf Wasser in den Autoklaven eingeleitet werden, und zwar ebenfalls über die Zuführungsleitung 13. Auch bei dieser Alternative für die Erhöhung des Wassergehalts werden die Kaffeebohnen durch das Rührwerk 11 bewegt. Etwaiger Überschuß an Wasser kann nach Erreichen des erwünschten Wassergehalts in den Kaffeebohnen über die Zuführungsleitung 13 wieder abgeführt werden. Danach erfolgt die Dampfbehandlung in der beschriebenen Weise.

## Patentansprüche

1. Verfahren zur Qualitätsverbesserung von Robusta-Kaffee durch Behandlung von rohen Robusta-Kaffeebohnen mit Wasserdampf bei erhöhter Temperatur und erhöhtem Druck sowie anschliependem Rösten, **dadurch gekennzeichnet**, daß zum Entfernen von 2-Methylisoborneol aus den Robusta-Kaffeebohnen deren Wassergehalt auf 30 % bis 45 % erhöht wird und die Robusta-Kaffeebohnen sodann mit Sattdampf von 135°C bis 140°C bei einem Druck von 3 bar bis 4 bar über einen Zeitraum von 40 min bis 120 min behandelt werden.

2. Verfahren nach Anspruch 1, dadurch gekennzeichnet, daß Wasserdampf durch die einen erhöhten Wassergehalt aufweisenden Robusta-Kaffeebohnen hindurchgeleitet wird.

3. Verfahren gemäß Anspruch 1 oder 2, dadurch gekennzeichnet, daß die Behandlung mit Sattdampf von etwa 138°C durchgeführt wird.

4. Verfahren gemäß einem oder mehreren der vorhergehenden Ansprüche, dadurch gekennzeichnet, daß der Druck während der Sattdampfbehandlung 3,1 bar bis 3,6 bar beträgt.

5. Verfahren gemäß einem oder mehreren der vorhergehenden Ansprüche, dadurch gekennzeichnet, daß die Behandlungszeiten mit Sattdampf 75 min bis 90 min beträgt.

6. Verfahren nach einem oder mehreren der vorangehenden Ansprüche, dadurch gekennzeichnet, daß die Robusta-Kaffeebohnen während der Behandlung mit Sattdampf ständig bewegt werden.

7. Verfahren gemäß einem oder mehreren der vorhergehenden Ansprüche, dadurch gekennzeichnet, daß die Robusta-Rohkaffeebohnen im Anschluß an die Behandlung mit Wasserdampf auf einen Feuchtigkeitsgehalt von 8 % bis 12 % getrocknet werden.

8. Verfahren nach einem oder mehreren der vorangehenden Ansprüche, dadurch gekennzeichnet, daß Robusta-Kaffeebohnen mit einem niedrigen Wassergehalt mittels Wasserdampf bei erhöhter Temperatur, vorzugsweise bei 135°C, und erhöhtem Druck, vorzugsweise 3,1 bar mit Wasser angereichert werden bis zu einem Wassergehalt von 30 % bis 45 %.

9. Verfahren nach einem oder mehreren der Ansprüche 1 bis 7, dadurch gekennzeichnet, daß Robusta-Kaffeebohnen mit einem niedrigen Wassergehalt durch Absorption von Wasser von 80°C bis 90°C mit Wasser angereichert werden bis zu einem Wassergehalt von 30 % bis 45 %, wobei zu den handelsüblichen Robusta-Kaffeebohnen eine Menge Wasser zugegeben wird, die unter den gewählten Bedingungen vollständig von dem Rohkaffee absorbiert wird.

10. Verfahren nach Anspruch 1 sowie einem oder mehreren der weiteren Ansprüche, dadurch gekennzeichnet, daß die Behandlung der Robusta-Kaffeebohnen zur Erhöhung des Wassergehalts sowie die anschließende Behandlung mit Sattdampf in ein und demselben Behälter (Autoklaven 10) durchgeführt wird.

## Claims

1. Process for improving the quality of robusta coffee by treating green robusta coffee beans with steam at elevated temperature and elevated pressure and subsequent roasting, characterized in that, to remove 2-methylisoborneol from the robusta coffee beans, their water content is increased to 30% to 45% and the robusta coffee beans are then treated with saturated steam at 135°C to 140°C at a pressure of 3 bar to 4 bar for a period of 40 minutes to 120 minutes.

2. Process according to Claim 1, characterized in that steam is passed through the robusta coffee beans having an elevated water content.

3. Process according to Claim 1 or 2, characterized in that the treatment is carried out using saturated steam at about 138°C.

4. Process according to one or more of the preceding claims, characterized in that the pressure during the saturated steam treatment is 3.1 bar to 3.6 bar.

5. Process according to one or more of the preceding claims, characterized in that the treatment time with saturated steam is 75 minutes to 90 minutes.

6. Process according to one or more of the preceding claims, characterized in that the robusta coffee beans are continuously agitated during the treatment with saturated steam.

7. Process according to one or more of the preceding claims, characterized in that the robusta green coffee beans subsequent to the treatment with steam are dried to a moisture content of 8% to 12%.

8. Process according to one or more of the preceding claims, characterized in that robusta coffee beans having a low water content are enriched with water up to a water content of 30% to 45% by steam at elevated temperature, preferably at 135°C, and elevated pressure, preferably 3.1 bar.

9. Process according to one or more of Claims 1 to 7, characterized in that robusta coffee beans having a low water content are enriched with water by absorption of water at 80°C to 90°C up to a water content of 30% to 45%, an amount of water being added to the commercially available robusta coffee beans which is completely absorbed by the green coffee under the selected conditions.

10. Process according to Claim 1 and one or more of the following claims, characterized in that the treatment of the robusta coffee beans to increase the water content and the subsequent treatment with saturated steam is carried out in one and the same vessel (autoclave 10).

## Revendications

1. Procédé d'amélioration de la qualité d'un café robusta par traitement de grains de café robusta crus à la vapeur d'eau à température accrue et à pression accrue, ainsi que par torréfaction ultérieure, caractérisé en ce que, pour l'élimination de 2-méthyl-isobornéol des grains de café robusta, leur teneur en eau est augmentée entre 30 % et 45 % et en ce que les grains de café robusta sont alors traités à la vapeur saturée entre 135°C et 140°C à une pression de 3 bar à 4 bar pendant une durée de 40 minutes à 120 minutes.

2. Procédé suivant la revendication 1, caractérisé en ce que de la vapeur d'eau est passée au travers des grains de café robusta qui présentent une teneur accrue en eau.

3. Procédé suivant l'une ou l'autre des revendications 1 et 2, caractérisé en ce que le traitement est exécuté avec de la vapeur saturée à approximativement 138°C.

4. Procédé suivant l'une quelconque des revendications précédentes, caractérisé en ce que, pendant le traitement à la vapeur saturée, la pression est comprise entre 3,1 bar et 3,6 bar.

5. Procédé suivant l'une quelconque des revendications précédentes, caractérisé en ce que le temps du traitement à la vapeur saturée est compris entre 75 min. et 90 min.

6. Procédé suivant l'une quelconque des revendications précédentes, caractérisé en ce que les grains de café robusta sont constamment déplacés pendant le traitement à la vapeur saturée.

7. Procédé suivant l'une quelconque des revendications précédentes, caractérisé en ce que, à la suite du traitement à la vapeur saturée, les grains de café robusta sont séchés à une teneur en humidité comprise entre 8 % et 12 %.

8. Procédé suivant l'une quelconque des revendications précédentes, caractérisé en ce que des grains de café robusta à faible teneur en eau sont enrichis en eau, jusqu'à une teneur en eau comprise entre 30 % et 45 %, au moyen de vapeur d'eau à une température accrue, par exemple de 135°C, et à une pression accrue, par exemple de 3,1 bar.

9. Procédé suivant l'une quelconque des revendications 1 à 7, caractérisé en ce que des grains de café robusta à faible teneur en eau sont enrichis en eau, jusqu'à une teneur en eau comprise entre 30 % et 45 %, par absorption d'eau entre 80°C et 90°C, une quantité d'eau qui est absorbée complètement par le café cru sous les conditions choisies étant ajoutée aux grains de café robusta du commerce.

10. Procédé suivant l'une quelconque des revendications précédentes, caractérisé en ce que le traitement des grains de café robusta pour l'augmentation de la teneur en eau ainsi que le traitement suivant à la vapeur saturée sont exécutés dans un seul et même récipient (autoclave 10).
